Europäisches Patentamt

**European Patent Office**

**Office européen des brevets**

(11) Numéro de publication: **0 123 623**

**A1**

(12) # DEMANDE DE BREVET EUROPEEN

(21) Numéro de dépôt: 84400808.6

(22) Date de dépôt: 20.04.84

(51) Int. Cl.³: **B 29 D 27/00**
**B 29 D 27/04**

(30) Priorité: 22.04.83 FR 8306624

(43) Date de publication de la demande:
31.10.84 Bulletin 84/44

(84) Etats contractants désignés:
AT BE CH DE FR GB IT LI LU NL SE

(71) Demandeur: ISOVER SAINT-GOBAIN
Les Miroirs 18, avenue d'Alsace
F-92400 Courbevoie(FR)

(72) Inventeur: Kafka, Bernard
3 avenue du Grand Cerf Auvillers
F-60290 Rantigny(FR)

(72) Inventeur: Meunier, Jean-Paul
Croix de Creil Breuil le Vert
F-60600 Clermont(FR)

(72) Inventeur: Have, Serge
1 rue du Moulin Breuil le Vert
F-60600 Clermont(FR)

(74) Mandataire: Muller, René et al,
SAINT-GOBAIN RECHERCHE 39, quai Lucien Lefranc
F-93304 Aubervilliers(FR)

(54) Procédé et dispositif pour la fabrication en continu de panneaux composites moulés.

(57) L'invention concerne la fabrication en continu de panneaux composites (23) comprenant une âme en mousse formée à partir de résines expansibles, et des couches de revêtement.

Selon l'invention, on coule à l'air libre pour former une nappe sur un revêtement inférieur (15), un mélange liquide contenant une résine expansible à la chaleur et un catalyseur (19), on chauffe par dessous la nappe entraînée par le revêtement inférieur, afin de provoquer son expansion et la durcissement de sa partie inférieure, on recouvre la face supérieure de ladite nappe au cours de son expansion par un revêtement supérieur (16), on introduit le composite formé dans une enceinte chauffée (13) alors que la partie interne supérieure de la nappe est encore molle et que la partie inférieure de celle-ci est dure, on calibre le composite par expansion de la partie encore molle en évitant un fluage latéral de cette partie interne supérieure molle de la nappe, on achève le durcissement du composite qu'on débite en panneaux.

L'invention s'applique à la fabrication de panneaux d'isolation.

./...

FIG.1

PROCEDE ET DISPOSITIF POUR LA FABRICATION EN CONTINU
DE PANNEAUX COMPOSITES EN MOUSSE

L'invention concerne la fabrication en continu de panneaux composites comprenant une âme en mousse formée d'une résine expansée et des couches de revêtement assurant notamment un renforcement des panneaux.

Des panneaux composites de ce type sont obtenus, par exemple, par coulée d'un mélange contenant une résine expansible sous l'action de la chaleur, sur une feuille de revêtement inférieure défilant en continu, puis par superposition à la couche coulée au cours de son expansion d'une feuille de revêtement supérieure, suivie d'un calibrage après expansion du composite, et découpe en panneaux de longueurs désirées après durcissement complet de ce composite.

Ce procédé n'est pas entièrement satisfaisant. Du fait notamment d'une répartition imparfaite de la résine au cours de la coulée du mélange, coulée qui s'effectue généralement au moyen d'une tête de coulée animée d'un mouvement de va et vient transversal à la direction d'avance de la feuille de revêtement inférieure faisant office de support, ou encore au moyen d'au moins une tête de coulée fixe disposée perpendiculairement à la direction de déplacement, il se forme des surépaisseurs et des creux dans la couche formée. Ces irrégularités sont amplifiées par l'expansion et on ne peut les éliminer ou tout au moins les atténuer que par un calibrage réduisant de façon importante l'épaisseur du composite. Etant donné qu'il ne peut y avoir un maintien latéral du composite dans la zone de calibrage pour les raisons indiquées par la suite, un tel calibrage, même dans le cas de faibles réductions d'épaisseur, par exemple de l'ordre de quelques millimètres, entraîne notamment un fluage latéral de la partie supérieure de la couche coulée qui dans le cas d'un processus de fabrication utilisant un chauffage par le dessous est plus molle que la partie inférieure. Ce fluage provoque alors une ligne ou surface de rupture et par là un affaiblissement des propriétés mécaniques des panneaux fabriqués. Lorsque l'on maintient latéralement le composite dans la zone de calibrage, l'excédent de matière reflue vers l'amont, s'accumule devant le passage de calibrage et perturbe la fabrication.

L'invention obvie aux inconvénients cités. Le procédé selon l'invention permet d'obtenir des panneaux présentant une bonne définition géométrique et de bonnes propriétés mécaniques.

Conformément à l'invention, on fabrique un composite en continu comprenant une âme en une mouse et au moins une couche de revêtement sur chacune de ses faces, en coulant à l'air libre, sur au moins une couche de revêtement inférieure, désignée par la suite par revêtement inférieure, un mélange liquide contenant une résine expansible à la chaleur pour former une nappe, en chauffant par le dessous celle-ci entraînée par le revêtement inférieur afin de provoquer son expansion et le durcissement de sa partie inférieure, en recouvrant la face supérieure de la nappe au cours de l'expansion par au moins une couche de revêtement supérieur, et en calibrant le composite alors que la partie-interne supérieure de la nappe est encore molle et que la partie interne inférieure de celle-ci est dure, tout en évitant un fluage latéral de ladite partie interne supérieure molle.

Selon un aspect du procédé, on évite le fluage latéral de la partie interne supérieure molle de la nappe expansée en limitant la compression du composite lors du calibrage. A cet effet, on présente le composite en formation au passage pour le calibrage alors que son épaisseur est légèrement inférieure, d'environ quelques millimètres à la distance de calibrage qui elle-même est légèrement inférieure, d'une valeur d'environ 1 à 5 millimètres, de préférence de 1 à 3 mm, à l'épaisseur maximale potentielle du composite, c'est-à-dire l'épaisseur correspondant à l'expansion maximale potentielle libre de la nappe, et on maintient le composite à la distance de calibrage jusqu'à son durcissement complet. En agissant ainsi au niveau superficiel du composite sur une épaisseur généralement comprise entre 1 et 5 millimètres, indépendante de l'épaisseur totale du composite fabriqué, on obtient un état de surface régulier tout en évitant la formation d'une ligne de rupture.

Dans une variante, on évite le fluage latéral au cours du calibrage en maintenant la partie supérieure encore molle de la nappe par imprégnation de cette partie d'au moins une couche de revêtement supérieure qui doit alors présenter des propriétés mécaniques suffisantes et notamment une bonne stabilité dimensionnelle, et qui, avantageusement est perméable au mélange liquide coulé pour permettre une meilleu-re imprégnation.

Dans cette variante, l'épaisseur totale du composite en formation arrivant au passage pour le calibrage peut être supérieure à la distance de calibrage, d'une valeur qui doit être toutefois inférieure à l'épaisseur non imprégnée du revêtement supérieur. Le calibrage a alors notamment pour effet d'introduire le revêtement supérieur dans la

couche interne molle qui est ainsi armée et ne peut fluer latéralement.

En ne chauffant que par le dessous selon l'invention, avant le calibrage, on évite de figer la couche supérieure de la nappe et par là notamment on évite une mauvaise imprégnation du revêtement supérieur.

Le chauffage par le dessous permet encore un meilleur transfert de la chaleur ce qui autorise la fabrication de mousse de très faible densité.

La nappe constituant l'âme généralement rigide en mousse peut être formée à partir de toute résine susceptible de former une mousse par l'action de la chaleur apportée par la réaction proprement dite et surtout par l'extérieur. Avantageusement, l'invention s'applique à la fabrication en continu de panneaux dont l'âme est une mousse phénolique c'est-à-dire une mousse formée à partir d'une résine résol en présence d'un agent tensio-actif, d'un agent d'expansion et d'un catalyseur de durcissement.

Les résines résol utilisées de préférence sont par exemple celles décrites dans la publication de brevet français 2 309 574. Le rapport molaire formaldéhyde sur phénol est compris entre 1 et 1,7 environ et de préférence il est voisin de 1,4. Ces résines ont un extrait sec d'environ 70 % en poids, une teneur résiduaire en phénol libre d'environ 7,5 % en poids et une viscosité de l'ordre de 1800 à 2000 centipoises à la température de 20°C.

L'agent d'expansion pour ces résines est généralement un mélange de pentanes ou d'éthers de pétrole ou de fréons. L'agent tensio-actif qui permet d'obtenir une bonne dispersion de l'agent d'expansion est par exemple une huile de silicone, un ester de sorbitan.

Les revêtements utilisés dans le cadre de l'invention peuvent être des feuilles imperméables ou au contraire perméables au mélange coulé. En tant que feuilles imperméables on peut utiliser des feuilles métalliques minces telles des feuilles d'aluminium, des feuilles de papier ou carton d'un grammage généralement supérieur à 50 g, des feuilles en matières plastiques compatibles avec le mélange coulé ou encore des revêtements bitumeux qui permettent d'obtenir des produits composites étanches utilisés par exemple pour l'étanchéité des toitures. En tant que feuilles perméables à la résine coulée, on peut utiliser des voiles tissés ou non, fabriqués à partir de fibres minérales telles les fibres de verre ou fibres organiques.

Les revêtements supérieurs utilisés dans la variante décrite précédemment, dans laquelle ils remplissent une fonction de maintien de

4

la partie supérieure molle de la nappe au cours du calibrage, doivent être comme indiqués auparavant, épais et résistants afin de constituer une armature empêchant le fluage latéral de la couche de résine au moment du calibrage du composite. Avantageusement, ils sont perméables au mélange coulé. On utilise par exemple un mat de fibres ou fils de verre continus, notamment un mat UNIFILO, c'est-à-dire un mat constitué de fils continus, à ensimage plastique, sans torsion, non coupés, ayant une masse surfacique de préférence supérieure à 250 g/m$^2$. On peut encore utiliser un carton ondulé.

Selon une caractéristique avantageuse de l'invention, on chauffe le revêtement inférieur qui reçoit la coulée du mélange liquide, à une température qui assure un figeage de celui-ci dès sont entrée en contact avec la couche. On évite ainsi que le mélange ne s'écoule et vienne perturber la fabrication surtout lorsque le revêtement inférieur est perméable.

Selon une autre caractéristique de l'invention, on établit un contact sans glissement entre le revêtement supérieur et le mélange coulé, en faisant avancer l'un et l'autre à des vitesses égales dans la zone de leur approche mutuelle. On évite ainsi de perturber le développement de la peau superficielle supérieure de la nappe de mousse. Le contact étant ainsi établi, il est avantageux d'assurer l'application du revêtement sur le mélange formant la nappe.

L'invention concerne également un dispositif pour la mise en oeuvre du procédé. Ce dispositif comprend un tapis transporteur inférieur, un tapis supérieur parallèle au tapis inférieur, plus court que le tapis inférieur et disposé au dessus de sa partie aval, ces deux tapis formant ensemble un passage pour le calibrage en épaisseur du composite, au moins une tête de coulée disposée au dessus de la partie amont du tapis transporteur inférieur, des moyens de chauffage disposés sous le tapis transporteur inférieur, des moyens d'alimentation en revêtement inférieur disposés en amont de la tête de coulée, des moyens d'alimentation en revêtement supérieur disposés entre la tête de coulée et le tapis supérieur, un four-tunnel entourant le passage pour le calibrage et dont, avantageusement, l'entrée correspond à l'entrée du passage pour le calibrage dans lequel s'achève le durcissement du produit composite.

Le dispositif peut aussi comprendre dans sa partie amont, avant le passage pour le calibrage, deux bandes latérales qui forment avec le tapis transporteur un canal d'expansion pour la mousse.

Le dispositif peut encore comprendre un organe assurant l'application du revêtement supérieur sur la nappe.

D'autres avantages et caractéristiques de l'invention apparaîtront dans la suite de la description faite en référence aux figures.

- la figure 1 est une vue générale du dispositif pour la fabrication en continu d'un composite comprenant une âme en résine expansée et des faces revêtues,

- la figure 2 est une vue en coupe du dispositif précédent dans une mise en oeuvre dans laquelle le composite atteint le passage de calibrage alors qu'il n'a pas atteint l'épaisseur correspondant à l'expansion maximale potentielle libre de la nappe,

- la figure 3 est une vue de détail de la figure 2,

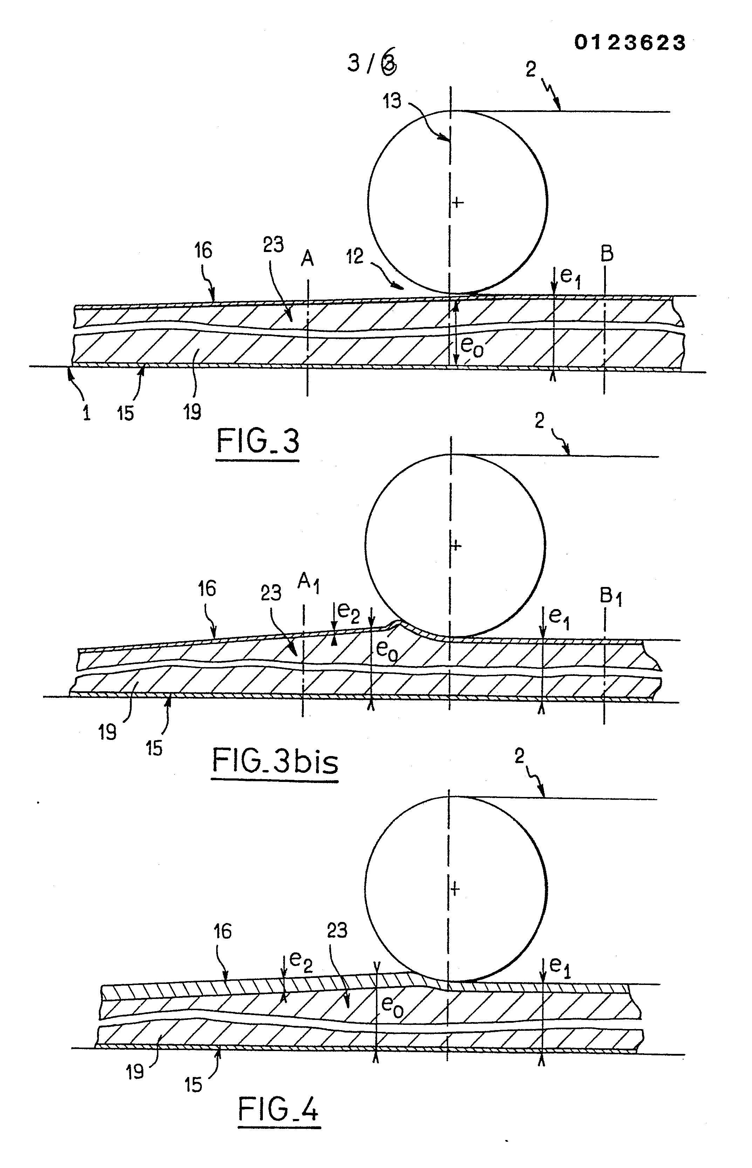

- la figure 3bis représente la même vue de détail lorsque le composite présente en amont du calibrage, une épaisseur supérieure à la distance du calibrage,

- la figure 4 représente la même vue de détail dans une mise en oeuvre du dispositif utilisant un revêtement supérieur épais, perméable et résistant et dans laquelle le composite en formation a atteint avant calibrage une épaisseur légèrement supérieure à la distance de calibrage,

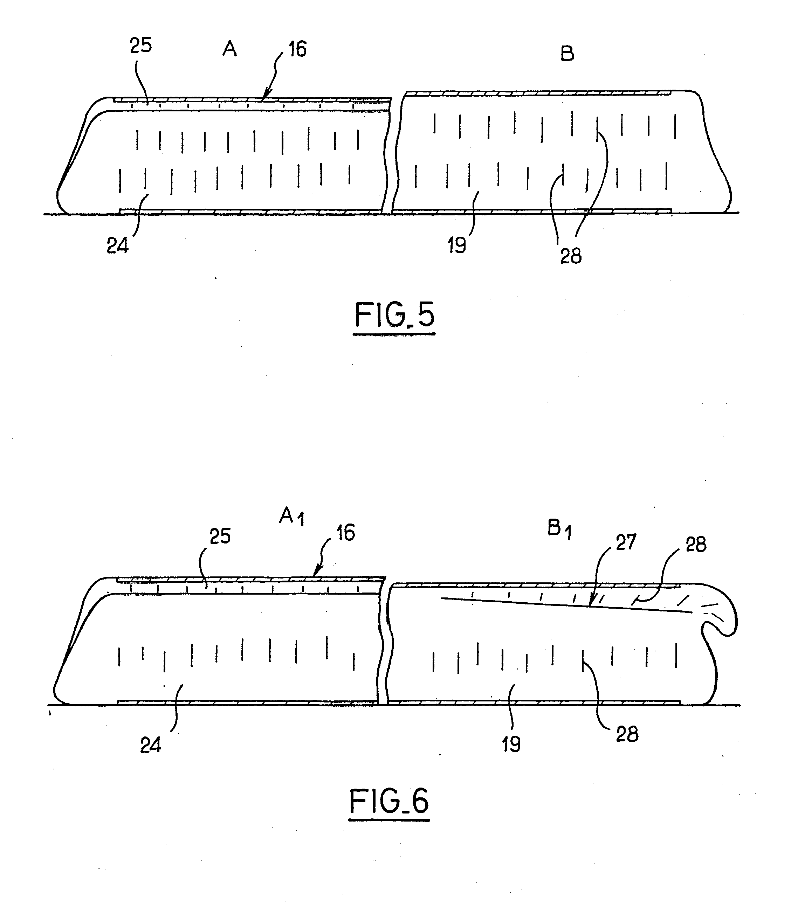

- la figure 5 représente deux demi-sections transversales du composite, avant et dans le passage pour le calibrage selon les lignes A et B de la figure 3,

- la figure 6 représente deux demi-sections transversales du composite lorsque le calibrage a pour effet de réduire son épaisseur avant et dans le passage pour le calibrage selon les lignes $A_1$ et $B_1$ de la figure 3bis,

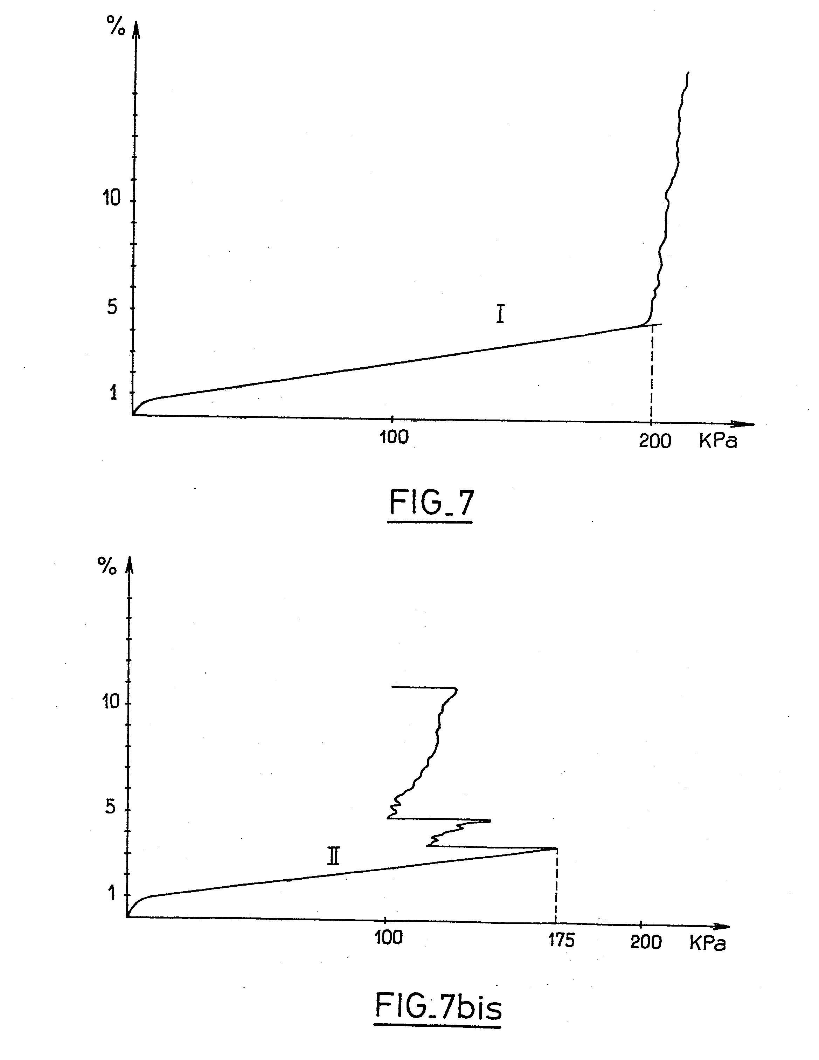

- les figures 7 et 7bis, 8 et 8bis représentent des courbes de pourcentages de déformation à la contrainte selon la norme NFT 56101 pour des panneaux composites selon l'invention et comparatifs.

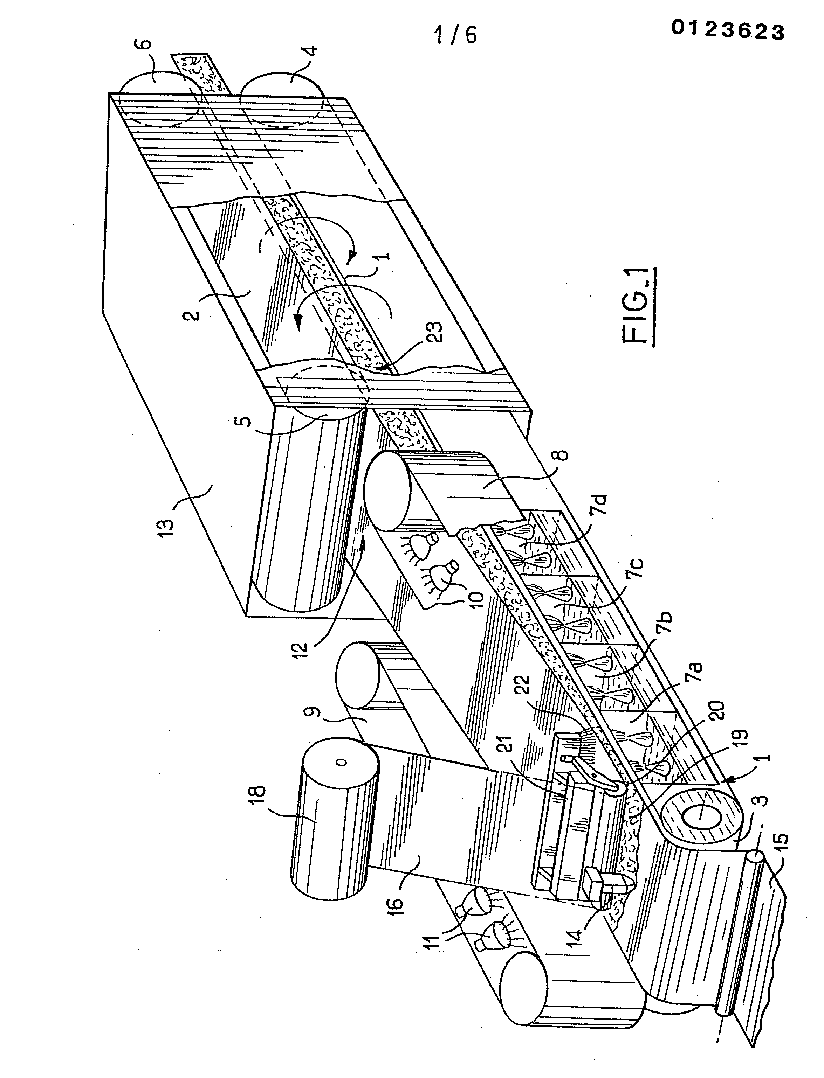

Les panneaux selon l'invention sont fabriqués en continu sur une ligne de production telle que celle représentée schématiquement sur la figure 1. Le dispositif de fabrication comporte un tapis transporteur inférieur sans fin 1 et un tapis supérieur sans fin 2 constitués chacun par exemple par une bande d'acier inoxydable d'une épaisseur voisine de 1 millimètre, recouverte d'un tissu de verre enduit de téflon sur le côté du tapis faisant face à la masse en expansion. Le tapis transporteur inférieur 1 possède un brin de transport environ deux fois plus long que le brin correspondant du tapis supérieur 2. Dans les exemples d'exécution donnés plus loin le brin du tapis inférieur 1 a une longueur voisine de 10 mètres. L'emploi de bandes métalliques 1 et 2, très minces, favorise beaucoup les échanges thermiques du dispositif et par conséquent donne une bonne souplesse à la fabrication.

Des cylindres de renvoi 3, 4 et 5, 6 respectivement, guident les tapis transporteurs 1 et 2 ; les cylindres 3 et 5 comportent un dispositif connu en soi dans lequel circule de l'eau chaude à température ajustable qui chauffe indirectement les bandes transporteuses. Un complément de chauffage est apporté à la bande inférieure 1, dans la partie non recouverte par le tapis supérieur 2, par une pulvérisation d'eau chaude à température ajustable, effectuée dans un certain nombre de compartiments 7a, 7b, 7c, 7d, situés sous le brin supérieur du tapis transporteur 1.

La température du tapis transporteur 1 est en général accrue d'un compartiment au suivant, dans le sens du déplacement du tapis, de façon à accroître la température de la nappe et de maîtriser l'expansion de celle-ci. La pulvérisation d'eau chaude dans les compartiments s'est révélée d'une grande souplesse d'emploi pour régler l'expansion de la nappe en fonction de la vitesse de durcissement de celle-ci.

Des bandes latérales sans fin 8 et 9 qui sont généralement de même constitution que le tapis sans fin 1 forment avec celui-ci un canal d'expansion de la mousse. En regard de ces bandes sont prévus des moyens de chauffage 10 et 11 des bandes latérales, tels que des lampes infra-rouge. Cette disposition a pour effet d'assurer une expansion uniforme de la nappe dans le sens transversal.

Dans la partie du dispositif où elles coopèrent pour constituer le passage pour le calibrage 12 du composite, les deux tapis sans fin 1 et 2 pénètrent dans un four tunnel 13 à circulation de gaz chaud, notamment d'air chaud, l'entrée du four-tunnel correspondant à l'entrée du passage pour le calibrage.

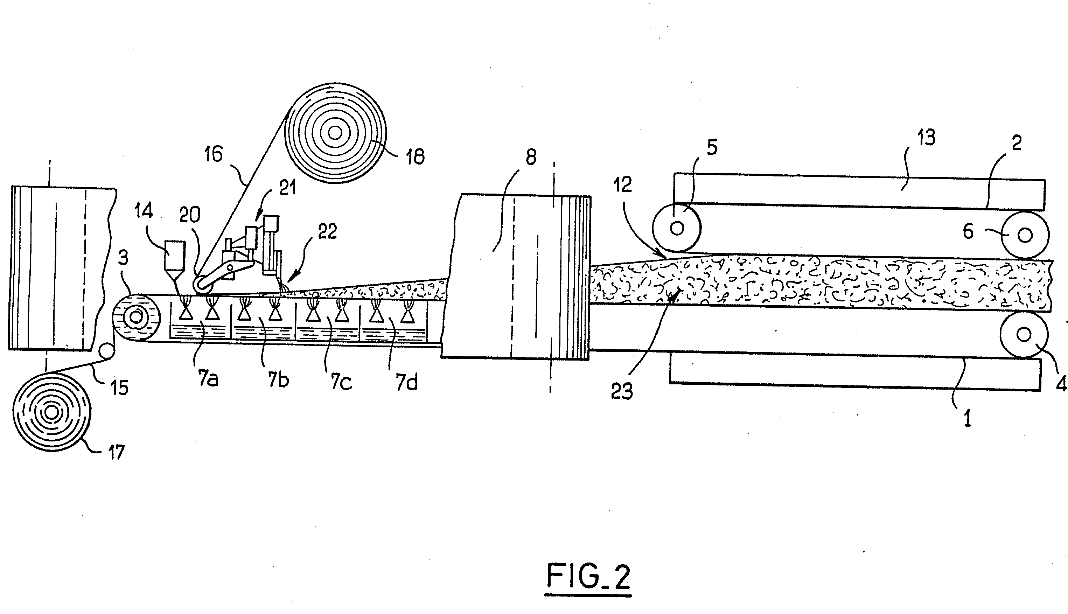

La ligne de fabrication est alimentée essentiellement d'une part en mélange expansible liquide, délivré à la tête de coulée 14 par des organes classiques non représentés et d'autre part en feuille de revêtement inférieur 15 et supérieur 16 provenant des rouleaux 17 et 18 comme représenté sur la figure 2.

Le mélange liquide déposé par coulée sur la feuille 15 contient essentiellement une résine résol liquide, un agent d'expansion également liquide, et un catalyseur acide.

La feuille de revêtement supérieure 16 est appliquée sur la couche coulée ou nappe 19 par un rouleau applicateur 20, porté par un équipage 21 qui comprend également dans sa partie aval une brosse 22 assurant l'application de la feuille de revêtement supérieure en la faisant pénétrer superficiellement dans la couche coulée.

Le cylindre de renvoi 3 peut être chauffé de façon à figer la partie inférieure de la couche coulée dès que celle-ci a imprégné la feuille.

La figure 2 et la figure 3 qui est une vue de détail, représentent le dispositif précédent dans une mise en oeuvre dans laquelle le composite 23 atteint le passage pour le calibrage alors qu'il présente une épaisseur $e_0$ inférieure à la distance de calibrage $e_1$. L'expansion de la nappe 19 du composite 23 continue dans le passage pour le calibrage jusqu'à ce qu'elle soit limitée par le brin inférieur du tapis supérieur 2.

La figure 3bis représente la même partie du dispositif que la figure 3 mais lorsque le composite 23 atteint le passage pour le calibrage 12 avec une épaisseur totale $e_0$ supérieure à la distance pour le calibrage $e_1$, d'une valeur supérieure à l'épaisseur $e_2$ du revêtement supérieur. Au moment du calibrage l'excédent de matière flux latéralement et forme aussi un bourrelet devant le tapis supérieur 2.

La figure 4 représente la même vue de détail dans une mise en oeuvre du dispositif utilisant un revêtement supérieur 16 épais, perméable et résistant et dans laquelle le composite en formation 23 atteint le passage pour le calibrage avec une épaisseur $e_0$ supérieure à la distance de calibrage $e_1$ d'une valeur néanmoins inférieure à l'épaisseur $e_2$ du revêtement supérieur. Au calibrage le revêtement supérieur 16 est introduit dans la couche interne encore molle de la nappe 19 dans laquelle il joue le rôle d'une armature empêchant tout fluage latéral ultérieur.

Des exemples de réalisations de panneaux selon le procédé de l'invention sont décrits ci-après :

EXEMPLE 1

On fabrique un composite continu à base de mousse phénolique, d'une épaisseur d'environ 50 millimètres, d'environ 500 millimètres de largeur, d'une masse volumique apparente d'environ 25 kg par $m^3$, sur les faces inférieure et supérieure de laquelle est appliqué un voile de verre dénommé "Velimat" (marque déposée par la société ISOVER SAINT-GOBAIN), référence 121, d'une masse surfacique de 95 $g/m^2$.

Le prémélange qui est admis dans la tête de coulée 14 a la composition suivante (parties en poids) :

- 100    parties de résol en solution aqueuse comme décrit dans la publication du brevet FR 2 309 574

(rapport molaire F/P = 1,4

% de phénol libre : 7,25

extrait sec : 72 %

viscosité à 20°C : 2000 centipoises)

- 1,125 parties d'huile de silicone DC 193 (commercialisée par la Société DOW CORNING)

- 6,75 parties de pentane technique à 25 % d'isopentane

Le prémélange, introduit à raison de 1,8 kg par minute, et le catalyseur (solution aqueuse d'acide chlorhydrique à 32 % en poids), introduit à raison de 0,2 kg par minute, sont mélangés dans la tête de coulée 14.

La tête de coulée déverse, dans la partie amont de la ligne de fabrication, le mélange dispersé sur le voile de verre 15 entraîné par le tapis sans fin 1 à la vitesse d'environ 1,63 mètre par minute, ce qui correspond à une durée de séjour de 6 minutes du produit sur la ligne dont la longueur utile est d'environ 10 mètres.

Le réglage de la température des fluides chauffants aux différents points de la ligne sont les suivants :

- Tambour 3 (eau chaude)                          :  55°C
- Compartiment 7a (eau chaude)                    :  55°C
-        "        7b ( "    " )                    :  60°C
-        "        7c ( "    " )                    :  60°C
-        "        7d ( "    " )                    :  70°C
- Tambour 5 (eau chaude)                          :  70°C
- Four-tunnel 13 (air chaud) ·                    : 125°C

Sous l'effet de l'élévation de température qu'elles subissent dans la zone d'expansion à l'air libre, c'est-à-dire durant le cheminement du tapis sans fin 1 au dessus des compartiments 7a, b, c et d, les gouttelettes de pentane dispersées dans le mélange se vaporisent et provoquent le gonflement de la nappe 19. Lorsque le mélange est arrivé à la hauteur du rouleau applicateur 20, situé à 30 centimètres environ en aval de la tête de coulée 14, qui applique le second voile 16 sur la surface de la nappe en expansion, on ajuste la pression de contact entre le voile 16 et la face supérieure de la nappe en réglant la distance séparant le rouleau applicateur 20 du tapis transporteur 1. Le bon

9 0123623

réglage est atteint lorsqu'il ne se produit aucun reflux de la matière du mélange au droit du rouleau 20, dans la zone de contact entre le voile 16 et la nappe en expansion. D'autre part, on prend soin d'effectuer un contact sans glissement du voile 16 sur la surface de la nappe en égalisant les vitesses d'avancement du voile 16 et de la nappe de mélange par le réglage de freins d'axe connu en soi dont sont munis les arbres porteurs des rouleaux de voile 17 et 18.

Le contact sans glissement ainsi établi avec la surface molle et collante de la nappe en expansion est égalisé par la brosse 22 située à 40 centimètres environ en aval du rouleau applicateur 20 et dont la pression sur le voile 16 est réglée de façon à noyer partiellement ce dernier dans la nappe. La pression appliquée par la brosse 22 sur le dessus du voile 16, est ajustée en réglant la position en hauteur de la brosse par rapport au tapis transporteur 1. Le bon réglage est atteint lorsque le mélange imprègne partiellement le voile 16 sans toutefois maculer les poils de la brosse ni s'échapper d'entre les voiles aux lisières de ceux-ci.

La progression du voile 16 vers le passage pour le calibrage 12 se poursuit par l'intermédiaire de la nappe de mélange, elle-même entraînée par le voile 15. Durant cette progression, la distance du voile 16 au tapis 1 s'accroît du fait du développement de la mousse au sein du mélange. A ce stade de l'expansion, le durcissement de la mousse commence à se produire au coeur de la nappe sous l'action de l'acide incorporé au prémélange dans la tête de coulée, tandis que la surface supérieure de la mousse demeure malléable, du fait que le voile 16 qui la recouvre en retarde le durcissement superficiel et aussi du chauffage agissant uniquement par le dessous. Le bord latéral de la nappe, auquel on a accès direct en amont du passage pour le calibrage 12 permet d'après son état et son toucher, de suivre l'évolution du durcissement de la mousse.

Les quantités de pentane et d'acide chlorhydrique employées ont été déterminées par essais préliminaires pour que le composite en formation arrivé au niveau du passage pour le calibrage de la machine dont on dispose, présente une épaisseur d'environ 2 mm inférieure à la distance de calibrage. La face supérieure de la nappe contenue par le voile de verre dont le profil longitudinal est très légèrement ascendant, entre alors complètement en contact avec le brin inférieur du tapis 2 au terme d'un parcours de la nappe dans le four-tunnel 13 de 30 centimètres environ, alors qu'il reste une capacité d'expansion en épaisseur de 2 à 3 mm. Dans ces conditions, le contact entre la nappe de mousse et le tapis supérieur 2 se produit sans apparition de plis ou de bourrelets et le maintien à épaisseur constante de la nappe est facilité par l'aptitude de la mousse à se déformer superficiellement à l'endroit du contact.

A la sortie du four-tunnel, le composite totalement durci, est débité en panneaux que l'on soumet à un séchage complémentaire à 115/120°C pendant une durée de 6 heures pour l'élimination de l'acide chlorhydrique et de l'eau résiduaires.

Les panneaux obtenus présentant un bon état de surface et ils sont exempts de ligne de rupture.

Sur la figure 5 qui représente deux demi-sections selon les lignes A et B de la figure 3 du composite obtenu selon cet exemple 1, la demi-section A montre que la nappe de mousse 19 est formée d'une couche inférieure déjà dure 24 surmontée d'une couche supérieure encore molle 25 contenant la feuille de revêtement supérieure 16. La demi-section B montre une nappe de mousse 19 entièrement durcie et homogène exempte de ligne de rupture. les traits 28 représentent schématiquement l'orientation principale des cellules. Cette orientation est verticale.

EXEMPLE 1bis

Cet exemple est un exemple comparatif décrivant la fabrication d'un composite du type décrit dans l'exemple 1, mais par une mise en oeuvre d'un procédé non conforme à l'invention.

On opère de la même façon et avec les mêmes produits de départ que dans l'exemple 1 sauf qu'on réduit la hauteur de calibrage, en disposant le brin inférieur du tapis supérieur 2 à une distance de 45 mm du tapis inférieur 1. Dans ces conditions, le composite en expansion arrive au passage pour le calibrage avec une épaisseur supérieure d'environ 3 millimètres à la distance de calibrage. Au passage pour le calibrage, le composite subit une réduction d'épaisseur par compression entre les brins du tapis inférieur et supérieur, et il se forme un bourrelet de matière 30 devant le tapis supérieur 2. Après séchage, le composite continu est débité en panneaux.

Sur la figure 6 qui représente deux demi-sections selon les lignes $A_1$ et $B_1$ de la figure 3bis du composite obtenu selon cet exemple 1bis, la demi-section $A_1$ montre à nouveau que la nappe de mousse 19 est formée d'une couche inférieure déjà dure 24 surmontée d'une couche supérieure encore molle 25 contenant la feuille de revêtement supérieure 16. Après le calibrage, la demi-section $B_1$ montre d'abord que la hauteur totale du composite a été réduite par compression et que cette compression a provoqué un fluage latéral illustré par les traits inclinés 28 représentant l'orientation principale des cellules de la couche interne supérieure, entrainant une ligne de rupture 27 entre cette couche supérieure et la couche inférieure.

Les figures 7 et 7bis représentent les courbes de pourcentages de déformation à la contrainte des panneaux obtenus selon l'exemple 1 (courbe I) et l'exemple 1Bis (courbe II) d'après la norme NFT 56101, et illustre leur résistance à la compression. Les panneaux obtenus selon l'exemple 1, exempts de ligne de rupture présentent une résistance à la compression d'environ 200 KPa alors que les panneaux obtenus selon l'exemple 1Bis présentent une résistance à la compression d'environ 175 KPa et ce malgré une densité plus forte pour ces derniers. Les ruptures de la courbe II indiquent aussi que le produit est hétérogène.

EXEMPLES 2 à 8

On reprend la mise en oeuvre décrite dans l'exemple 1 que l'on applique à la fabrication de panneaux de masses volumiques et d'épaisseurs variées. Les réglages de fabrication correspondants sont donnés dans le tableau 1 reporté à la fin de la description.

Les panneaux obtenus présentent toujours un état de surface très satisfaisant et de bonnes propriétés mécaniques.

EXEMPLE 9

On fabrique un composite continu de mousse phénolique d'une épaisseur d'environ 50 mm, d'environ 500 mm de largeur, d'une masse volumique apparente d'environ 40 kg/m$^3$ , sur la face inférieure duquel est appliqué un voile de verre Velimat 121 comme dans les exemples précédents, alors que sur la face supérieure est appliquée un voile de verre UNIFILO d'environ 450 g/m$^2$ d'environ 6 mm d'épaisseur.

Le prémélange qui est admis dans la tête de coulée 14 à la composition suivante :

- 100    parties d'une résine formo-phénolique présentant un rapport molaire F/P = 1,5, 6,5 % de phénol libre, 70,5 % d'extrait sec, une viscosité à 20°C de 1500 centipoises,
- 1,2    parties d'huile de silicone DC 193,
- 6,5    parties de pentane technique.

Le prémélange est introduit à raison de 2,1 kg par minute et le catalyseur, une solution d'un mélange d'acide sulfurique et phénol-sulfonique à 80 % en poids, introduit à raison de 0,26 kg par minute, sont mélangés dans la tête de coulée 14.

Le mélange est versé sur le voile de verre entraîné par la bande sans fin 1 à la vitesse d'environ 1,53 m/mn ce qui correspond à une durée du séjour d'environ 6 minutes.

Les températures de la ligne sont les suivantes :

- tambour 3 : 45°C
- compartiment 7a : 43°C
- " 7b : 47°C
- " 7c : 60°C
- " 7d : 51°C
- étuve : 91°C

L'expansion de la mousse et l'application du revêtement supérieur s'effectue comme précédemment sauf que le revêtement est peu ou pas imprégné avant le calibrage et que le composite en formation présente une épaisseur $e_0$ avant le passage pour le calibrage, légèrement supérieure, d'environ 3 millimètres, à la distance de calibrage $e_1$ et lorsque le composite passe dans le passage, sa face supérieure subit un pressage de la part du tapis supérieur 2, ce qui entraine une imprégnation de la couche superficielle molle de la nappe par la feuille de revêtement supérieure, épaisse.

A la sortie du dispositif le composite continu, durci, est découpé en panneaux qui présentent un bon état de surface et qui sont exempts de ligne de rupture.

EXEMPLE 10 à 15

Le tableau 2 donne des exemples de fabrication de panneaux à base de mousse phénolique en utilisant en tant que catalyseur des solutions de mélanges d'acide sulfurique et d'acide phénol-sulfonique. Ces panneaux sont revêtus sur leur deux faces de feuilles de revêtement choisies parmi : les voiles de verre "Velimat", les cartons ondulés à une face papier kraft, des complexes du type aluminium-papier kraft, des voiles de verre bitumineux.

EXEMPLE 13bis

On opère dans les mêmes conditions que dans l'exemple 13, sauf qu'on réduit la distance de calibage à 45 mm. Dans ces conditions, le composite en expansion arrive au passage pour le calibrage avec une épaisseur supérieure d'environ 3 millimètres à la distance de calibrage. Il s'ensuit qu'au passage pour le calibrage le composite subit une réduction d'épaisseur par compression.

De même que pour l'exemple 1bis, les panneaux obtenus finalement ne sont pas satisfaisants et présentent une ligne de rupture.

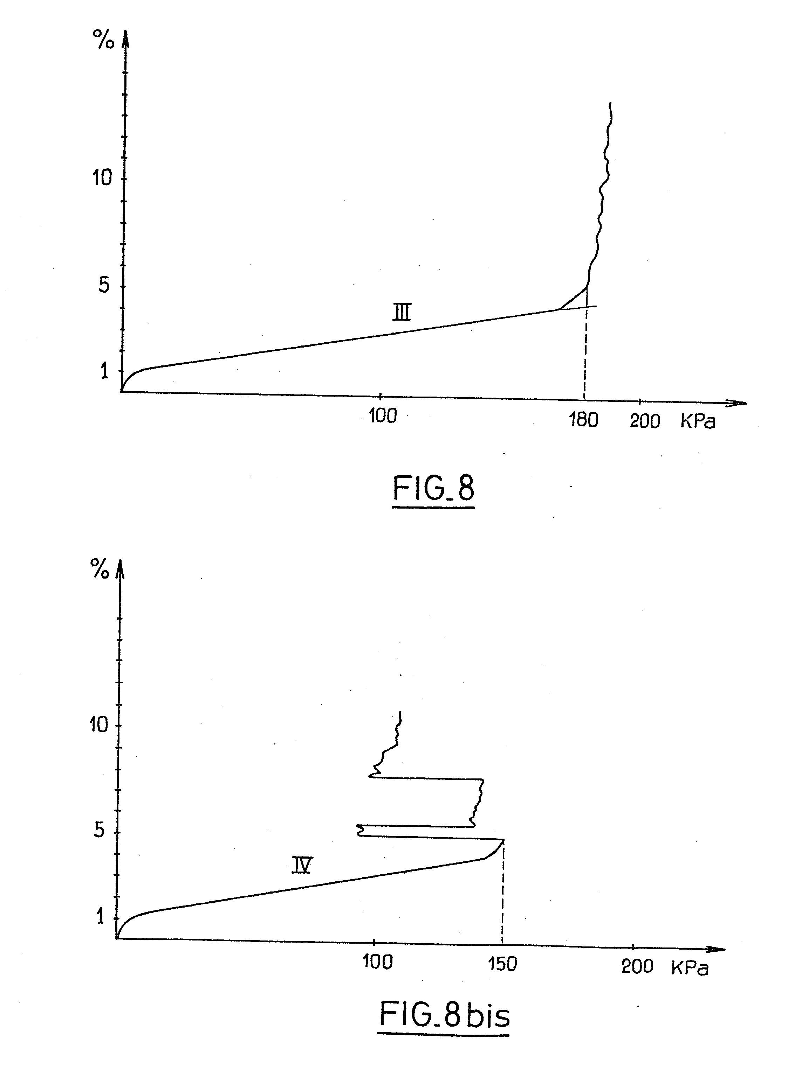

Les figures 8 et 8bis illustrent la résistance à la compression de panneaux fabriqués selon l'exemple 13 (courbe III) et 13bis (Courbe IV). A nouveau, les panneaux obtenus selon l'exemple 13 exempts de lignes de rupture montre une résistance à la compression d'environ 180 KPa alors que les panneaux obtenus selon l'exemple comparatif 13bis présentent une résistance à la compression d'environ 150 KPa et ce malgré une densité plus forte pour ces derniers.

| | 2 | 3 | 4 | 5 | 6 | 7 | 8 |
|---|---|---|---|---|---|---|---|
| Exemples n° | | | | | | | |
| Masse volumique aparente (kg/m³) | 18 | 20 | 10 | 25 | 25 | 25 | 25 |
| Epaisseur (mm) | 50 | 40 | 50 | 30 | 25 | 20 | 80 |
| Prémélange . Résol en solution aqueuse | 100 | 100 | 100 | 100 | 100 | 100 | 100 |
| (parties en . Huile de silicone DC 193 | 2 | 1,75 | 1,3 | 1,1 | 1,2 | 1,4 | 1 |
| poids) . Pentane technique | 12 | 10 | 20 | 6,25 | 7 | 8 | 5,75 |
| Nature du revêtement | "Vélimat" 121 | | | | | | |
| Réglage des Températures (en °C) Tambour 3 | 55 | 55 | 55 | 60 | 60 | 60 | 60 |
| Compartiment 7a | 55 | 55 | 55 | 60 | 60 | 60 | 60 |
| " 7b zone | 55 | 60 | 60 | 60 | 60 | 60 | 60 |
| " 7c d'expan- | 55 | 60 | 60 | 65 | 55 | 60 | 70 |
| " 7d sion | 70 | 70 | 70 | 70 | 70 | 70 | 70 |
| Tambour 5 | 70 | 70 | 70 | 70 | 70 | 70 | 70 |
| Etuve 13 | 125 | 125 | 125 | 125 | 125 | 125 | 125 |
| Vitesse de ligne (m/mn) | 1,65 | 1,63 | 1 | 1,63 | 1,96 | 1,96 | 1,63 |
| Temps de séjour (mn) | 6 | 6 | 10 | 6 | 5 | 5 | 6 |
| Débits Prémélange | 1,260 | 1,100 | 0,600 | 1,100 | 1,080 | 1,910 | 2,850 |
| (Kg/mn) Catalyseur HCl à 32 % | 0,155 | 0,130 | 0,100 | 0,130 | 0,125 | 0,115 | 0,280 |
| Durée de séchage des panneaux à 115/120°C (h) | 6 | 6 | 6 | 4,5 | 4 | 3,5 | 12 |

TABLEAU 1

| Exemples n° | 10 | 11 | 12 | 13 | 14 | 15 |
|---|---|---|---|---|---|---|
| Masse volumique aparente (kg/m³) | 16 | 20 | 25 | 30 | 30 | 45 |
| Epaisseur (mm) | 50 | 50 | 25 | 50 | 25 | 50 |
| Prémélange . Résol en solution aqueuse | 100 | 100 | 100 | 100 | 100 | 100 |
| (parties en . Huile de silicone DC 193 | 2,7 | 1,8 | 1,7 | 1,125 | 1,35 | 1 |
| poids) . Pentane technique | 16 | 11 | 10 | 5,5 | 8 | 3 |
| Nature du revêtement | "Vélimat" 121 | carton ondulé 1face Kraft 360 g/m² | "Vélimat" 121 | Kraft alu | Voile de verre bitumineux | carton ondulé 1face Kraft 360 g/m² |
| . Tambour 3 | amb. | 55 | 55 | 55 | 55 | 60 |
| Réglage Compartiment 7a | amb. | 60 | 50 | 55 | 50 | 65 |
| des " 7b zone | 60 | 65 | 60 | 60 | 60 | 65 |
| Températures " 7c d'expan- | 60 | 65 | 60 | 60 | 60 | 65 |
| (en °C) " 7d sion | -- | 70 | 65 | 60 | 65 | 70 |
| Tambour 5 | 70 | 70 | 70 | 70 | 70 | 70 |
| Etuve 13 | 125 | 125 | 125 | 125 | 125 | 125 |
| Vitesse de ligne (m/mn) | 1,22 | 1,63 | 1,63 | 1,63 | 1,63 | 1,63 |
| Temps de séjour (mn) | 8 | 6 | 6 | 6 | 6 | 6 |
| débits Prémélange | 0,69 | 1,20 | 0,715 | 1,77 | 0,778 | 2,636 |
| (Kg/mn) Catalyseur sulfurique | 0,10 | 0,135 | 0,095 | 0,19 | 0,102 | 0,274 |

TABLEAU 2

1

REVENDICATIONS 0123623

1. Procédé de fabrication en continu de panneaux de mousse, notamment de mousse phénolique, formés à partir de résines expansibles sous l'action de la chaleur et renforcés superficiellement par des revêtements, caractérisé en ce qu'on coule à l'air libre pour former une nappe sur un revêtement inférieur, un mélange liquide contenant notamment la résine expansible à la chaleur et un catalyseur, on chauffe par le dessous la nappe entraînée par le revêtement inférieur afin de provoquer l'expansion de ladite nappe et le durcissement de sa partie inférieure, on recouvre la face supérieure de ladite nappe au cours de son expansion par un revêtement supérieur, on introduit le composite formé dans une enceinte chauffée alors que la partie interne supérieure de la nappe est encore molle et que la partie interne inférieure de celle-ci est dure, on calibre le composite par expansion de la partie encore molle en évitant un fluage latéral de cette partie interne supérieure molle de la couche, on achève le durcissement du composite qu'on débite en panneaux.

2. Procédé selon la revendication 1, caractérisé en ce qu'on limite la compression du composite au calibrage en introduisant le composite en formation dans l'enceinte chauffée dont l'entrée correspond à l'entrée du passage pour le calibrage alors que son épaisseur est légèrement inférieure à l'épaisseur maximale potentielle du composite correspondant à l'expansion maximale potentielle libre de la nappe, et en maintenant le composite à la distance de calibrage, jusqu'à son durcissement complet.

3. Procédé selon la revendication 2, caractérisé en ce que le maintien à épaisseur est effectué alors que la nappe de mousse possède un reste de capacité d'expansion en épaisseur compris entre 1 et 5 millimètres et de préférence compris entre 2 et 3 millimètres.

4. Procédé selon la revendication 1, caractérisé en ce qu'on évite le fluage latéral par un maintien de la couche supérieure encore molle du composite par l'utilisation d'un revêtement supérieur, épais et résistant et de préférence perméable.

5. Procédé selon la revendication 4, caractérisé en ce qu'on présente le composite en formation au passage pour le calibrage alors que son épaisseur est supérieure à la distance de calibrage d'une valeur toutefois inférieure à l'épaisseur non imprégnée du revêtement supérieur, le calibrage ayant ainsi pour effet notamment d'introduire le revêtement supérieur dans la couche interne molle.

6. procédé selon une des revendication 4 ou 5, caractérisé en ce qu'on utilise en tant que revêtement supérieur, un mat de fibres de verre continues ayant une masse surfacique supérieure à 250 g/m².

7. Procédé selon une des revendications 1 à 6, caractérisé en ce que la résine expansible est une résine résol.

8. Procédé selon une des revendications 1 à 7, caractérisé en ce qu'on chauffe le revêtement inférieur à une température assurant aussitôt la gélification du mélange qui l'a imprégné.

9. Procédé selon l'une des revendications 1 à 8, caractérisé en ce qu'après le contact de la feuille de revêtement supérieure et la nappe en expansion, on assure l'application de ladite feuille de revêtement sur la face supérieure de la nappe.

10. Procédé selon une des revendications 7 à 9, caractérisé en ce que le catalyseur est un mélange d'acide sulfurique et d'acide phénol-sulfonique.

11. Dispositif pour la mise en oeuvre du procédé selon une des revendications 1 à 10, caractérisé en ce qu'il comprend un tapis transporteur inférieur (1), un tapis supérieur (2) parallèle au tapis inférieur, plus court que le tapis inférieur et disposé au dessus de sa partie aval, ces deux tapis formant ensemble un passage pour le calibrage du composite en épaisseur, au moins une tête de coulée disposée au dessus de la partie amont du tapis transporteur inférieur, des moyens de chauffage disposés sous le tapis transporteur inférieur, des moyens d'alimentation en revêtements supérieur et inférieur, un organe d'application du revêtement supérieur pour l'appliquer sur la nappe, un four-tunnel entourant le passage pour le calibrage, dans lequel s'achève le durcissement du produit composite.

12. Dispositif selon la revendication 11, caractérisé en ce que l'entrée du four-tunnel correspond à l'entrée du passage pour le calibrage.

13. Panneaux obtenus par la mise en oeuvre du procédé selon une des revendications 1 à 10.

14. Panneaux selon la revendication 13, caractérisé en ce qu'il comprend en tant que feuille de revêtement supérieure, un mat de fibres de verre continues de type UNIFILO d'une masse surfacique supérieure à 250 g/m².

15. Panneau selon la revendication 13, caractérisé en ce qu'il comprend en tant que revêtement supérieur, une feuille bitumineuse.

0123623

FIG.1

0123623

**FIG.2**

0123623

FIG_3

FIG_3bis

FIG_4

FIG.5

FIG.6

FIG_7

FIG_7bis

0123623

FIG. 8

FIG. 8 bis

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | GB-A-1 001 556 (UNION CARBIDE)<br><br>* Page 6, revendications 1,7; figure 7 *<br>--- | 1,2,9,<br>11,12 | B 29 D 27/00<br>B 29 D 27/04 |
| X | FR-A-2 366 117 (TOYO RUBBER CHEM.)<br>* Revendications 1,4,7; figure 1 *<br>--- | 1,2,9,<br>12 | |
| X | DE-A-2 167 015 (HENNECKE GmbH)<br><br>* Revendications 1,2; figure 5 *<br>--- | 1,2,9,<br>12 | |
| X | US-A-4 264 673 (BREIDENBACH-KNIS)<br>* Page 6, revendication 1; figure 5 *<br>--- | 1,12 | |
| A | FR-A-1 581 643 (SAINT-GOBAIN)<br>* Page 5, lignes 18-22 *<br>--- | 6 | DOMAINES TECHNIQUES RECHERCHES (Int. Cl. 3)<br><br>B 29 D |
| A | EP-A-0 056 354 (LASSUS G.G.)<br>* Page 11, revendications 2,3; figure 1 *<br>--- | 1,7 | |
| A | FR-A-2 391 241 (SOC. CHIM. DES CHARBONNAGES)<br>* Revendication 1; page 5, ligne 8 *<br><br>----- | 7,10 | |

Le présent rapport de recherche a été établi pour toutes les revendications

| Lieu de la recherche | Date d'achèvement de la recherche | Examinateur |
|---|---|---|
| LA HAYE | 25-05-1984 | BANNWARTH C.L. |